Europäisches Patentamt

European Patent Office

Office européen des brevets

(11) Publication number: **0 309 609**

A1

# EUROPEAN PATENT APPLICATION

(21) Application number: 87114375.6

(51) Int. Cl.⁴: **C04B 28/02**

(22) Date of filing: 02.10.87

(43) Date of publication of application:
05.04.89 Bulletin 89/14

(84) Designated Contracting States:
AT CH DE ES LI NL SE

(71) Applicant: **Bio-Kil Chemicals Limited**
**3 Bedford Square**
**London WC1B 3RA(GB)**

(72) Inventor: **Clarke, Neil**
**33, Maliston Road Great Sankey**
**Warrington Cheshire, WA5 1JR(GB)**
Inventor: **Lane, John Raoul Grendon**
**22, Rathmore Avenue**
**Mossley Hill Liverpool, L18(GB)**
Inventor: **Burton, Michael**
**24, Okell Street**
**Runcorn Cheshire WA7 5AS(GB)**

(74) Representative: **ffrench-Lynch, Cecil et al**
**Laporte Industries Ltd., Group Patent**
**Department, P.O. Box 2, Moorfield Road**
**Widnes, Cheshire WA8 OJU(GB)**

(54) Settable lining composition.

(57) A pipe or sewer lining composition suitable for application to wet surfaces comprising one or more epoxy resins together with one or more hardeners therefor, hydraulic cement together with water to combine therewith and one or more particulate inorganic fillers characterised by a content in total of epoxy resin and hardener of from 20% to 50% by weight, of cement in from 2% to less than 20% by weight and of particulate inorganic filler in from 30% to 60% by weight.

The epoxy resin is preferably a water-dilutable normally liquid epoxy resin. Excellent flexural modulus and strength are obtained by the use of specified size fractions and proportions of inorganic particulate fillers in which a 50 to 250 micron size fraction preferably comprises a grit.

EP 0 309 609 A1

## Settable lining composition

This invention relates to a settable composition suitable for lining the interior surfaces of pipes such as, for example, sewer pipes or water mains pipes or lining any other surface subject to deterioration and moist conditions. Such surfaces may, for example, be of brick, ceramic, concrete or metallic construction.

In many of the developed industrial countries the sewage mains system is of considerable age and may have deteriorated considerably due to ground movements and the hydrostatic pressure of ground waters. Many metallic water mains are also of considerable age and may have corroded due to contact with sometimes quite acidic or basic ground waters or even due to the long term corrosive effect of the utility water carried in them.

In order to obviate the need to excavate and replace such mains there have been proposed methods, apparatus and compositions for use to repair the mains by lining them internally with an adherent waterproof and structurally reinforcing coating. The requirements to be met by a composition suitable for forming such a lining are particularly stringent in that it must be capable of application by remotely controlled machinery operating within runs of piping or sewer which are often of a bore too small for the entry of operator personnel, it preferably adheres firmly to the often moist surface it is intended to coat at a thickness of, often, over 1cm, it preferably sets without sagging and it preferably provides a coating having a considerable flexural strength.

Cement mortars, that is compositions based on a hydraulic cement and an inorganic filler settable by the addition of water, have failed to meet the above requirements on a number of counts and developments have centred on polymer loaded cements in the hope of attaining the required properties. The term "hydraulic cement" describes an inorganic material which is in a partially or fully dehydrated state and which hardens by binding water. Examples of such cements are Portland Cement, alumina cement and calcium silicate cement.

A number of proposals for polymer loaded cement compositions for lining purposes in which the polymer comprises a polyurethane system have been proposed. Due to the presence of an isocyanate and water in such compositions there is a tendency for the evolution of carbon dioxide due to reaction between these two components during cure resulting in foaming and reduced strength in the product. This problem has been addressed in United Kingdom Patent Specification No. 1367086 of Imperial Chemical Industries Limited, relating to a flooring composition in which an alkaline compound of a Group I metal is included in the composition to absorb the carbon dioxide by reacting with it. Compositions suitable for lining pipes comprising a polyurethane resin system, water and an inorganic alkaline compound capable of absorbing evolved carbon dioxide are disclosed in United Kingdom Patent Specification No. 2146649 of Bio-Kil Chemicals Limited and European Patent Specification No. 0145269 of Costain Streeter Lining Limited. Polyurethane-containing polymer cements such as those referred to above have not fully satisfied the requirements for lining sewer or water mains as set out above for example with respect to flexural strength and/or application properties.

The present invention more particularly relates to the provision of a lining composition suitable for use in the lining of sewer or water mains or the like said composition being a polymer cement composition in which the polymer comprises one or more epoxy resins.

There has been a proposal to line a corroded underground pipe with an epoxy resin in European Patent Specification No. 0094819 of Ram Services Limited, although no detailed formulation for the composition is proposed and there is no conception of the inclusion of cement or other inorganic fillers. French Patent Specification No. 2323509 of Rexnord proposes the centrifugal coating of pipes intended for the transport of liquids with an anhydrous epoxy resin composition containing asbestos and particles of aluminium oxide. The composition is not suitable for application in single thick layers and is not subject to the difficulties of application associated with the coating of corroded underground pipes.

Epoxy resin-containing polymer cements have been disclosed but not with reference to the particular application envisaged herein. One such composition is disclosed in Belgian Patent Specification No. 638157 and comprises 50 parts of Portland Cement, 12.45 parts of a liquid epoxy resin, 7.7 parts of liquid polyamide and water. The composition contains no inorganic filling material. A further such composition is disclosed in British Patent No. 1158592 of C.A. Redfarn, which comprises 80 parts of Portland Cement, 15 parts of epoxy resin, 2.1 parts of a polyamine together with 80 parts of sand, 5 parts of asbestos fibre, a small quantity of a brominated epoxy compound for flame resistance, a small quantity of a cellulose derivative as a water retention agent and 34 parts of water.

The two epoxy cement compositions mentioned above are primarily cement compositions, since cement is the major structural material therein, modified by the inclusion of a relatively minor amount of epoxy resin. Such compositions have a high rigidity and a low flexural strength due to the emphasis on cement amongst the ingredients, which would render them unsatisfactory for the particular application envisaged herein. The flexural modulus and strength of linings produced by using the compositions provided by the present invention are important features. If the flexural modulus is too high an undesirably rigid lining, subject to cracking when subjected for example to earth movement or traffic vibration, may result. If the flexural modulus and flexural strengths are too low the lining may be unable to support a badly corroded or damaged pipe.

The present invention provides a composition suitable for lining a pipe or sewer comprising one or more epoxy resins together with one or more hardeners therefor, hydraulic cement together with water to combine therewith and one or more particulate inorganic fillers characterised by a content in total of epoxy resin and hardener of from 20% to 50% by weight, of cement in from 2% to less than 20% by weight and of particulate inorganic filler in from 50% to 60% by weight. The said composition is characterised by the presence of cement in a quantity less than that of the combined epoxy resin and hardener, by the presence of particulate inorganic filler in a greater quantity than that of the cement which features are major keys to the problem of providing suitable flexural characteristics in pipe linings, and by the further aspects or features thereof described hereafter.

The epoxy resin used in accordance with the present invention may very suitably be a diglycidylether. Such ethers may be produced by the reaction under alkaline conditions and usually at a temperature of from about 75°C to 175°C between an epihalohydrin, preferably epichlorohydrin, and a polyol, preferably a diol. Suitably the polyol is a polyphenol such as, for example, resorcinol, pyrocatechol, hydroquinone, 1,4-dihydroxy naphthalene, bis-(4-hydroxyphenyl) tolyl methane, 4,4' dihydroxy diphenyl, bis- (4-hydroxyphenyl) sulphone or, particularly preferably, 4,4' dihydroxy diphenyl dimethylmethane (Bisphenol "A"). Another group of epoxy resins which may suitably be used according to the present invention are the cycloaliphatic epoxides such as for example 3,4-epoxycyclohexylmethyl-3,4-epoxy cyclohexane carboxylate, vinyl cyclohexene dioxide or bis-(3,4-epoxycyclohexyl)adipate. Alternatively the cycloaliphatic epoxide may be based on cyclopentadiene or derivatives thereof. A further group of epoxy resins which may suitably be used according to the present invention are the epoxidised polydienes. We mean by polydienes, polymers derived from monomeric dienes. The diene may have a main chain of 4 to 8 carbon atoms comprising for example, butadiene or isoprene or substituted derivatives thereof such as 2-methyl 1.4 butadiene. Each substituent group may suitably be an alkyl group and contain not more than 5 carbon atoms. The polydiene may suitably be a copolymer with an unsaturated monomer such as styrene, vinyl toluene, alpha-methyl styrene, acrylonitrile, or acrylic or methacrylic esters. Polydiene epoxides may be obtained commercially or may be produced by techniques known in the art by the action of a peracid on the polydiene in a suitable solvent system. Yet a further group of epoxy resins which may suitably be used according to the present invention are the unsaturated natural oil epoxides for example epoxides of soya oil.

The epoxy resin is preferably a normally liquid water dilutable epoxy resin. Water dilutable epoxy resins are chemically modified in known manner to prevent reaction with the water until the modified resin is brought into reactive contact with a hardener. Preferably the epoxy resin has a molecular weight of not more than about 600, preferably of from 350 to 500 and an epoxy equivalent weight of at least 0.3 equivalents/100 g, preferably of from 0.35 to 0.55 equivalents/100 g. A suitable water dilutable epoxy resin is available under the trade name Europox 776 from Schering. The presence of a water-dilutable epoxy resin plays a particular part in preventing premature hardening of the composition which would otherwise occur through hydration of the cement and enhances the adhesiveness of the composition on wet surfaces typical in, for example, sewers.

According to the present invention the hardener for the epoxy resin may suitably be a coupling type of hardener which may suitably be selected from one or more of aliphatic polyamine hardeners, polyamide hardeners, for example fatty acid polyamide products or polycarboxylic anhydride hardeners capable of acting under the ambient temperature conditions. Alternatively the hardening agent may comprise a suitable acidic or basic polymerisation catalyst such as a Lewis acid or a tertiary amine for example boron trifluoride or tributylamine. The quantity of hardener of the coupling type may suitably be from 10% to 75% of the epoxy resin. If a catalytic type of hardener is used it may suitably be in a much smaller proportion for example from 0.5% to 10% by weight of the epoxy resin.

The present invention is particularly preferably further characterised by the particulate inorganic filler being of a wide particle size distribution, preferably comprising fractions in the sub-micron and/or in the 1 micron to 50 micron and in the 50 micron to 500, preferably 50 micron to 250 micron, ranges. Preferably the sub-micron fraction of inorganic particulate filler is present as particles substantially in the 0.1 to 1.0 microns size range and/or is in a weight proportion of the filler of from 2% to 35% particularly preferably from 10% to 30%. Preferably the 1 to 50 micron fraction of inorganic particulate filler is present in a weight proportion of the filler of from 30% to 80% particularly preferably from 40% to 75%. Preferably the 50 to 250 micron fraction of the particulate inorganic filler is present in a weight proportion of the filler of from 5% to 40% particularly preferably from 10% to 40%. The sub 1 micron fraction of the filler is very suitably provided by a finely divided siliceous material for example a microsilica sand currently available from the ELKEM company. The 1 to 50 micron fraction of the filler is preferably provided by quartz powder, fly ash or talc, alone or in combination and may also comprise a spherical aluminosilicate or other void filler. The 50 to 250 size fraction of the filler is preferably provided by a sand, for example Chelford (Trademark) sand or by quartz grit. The inclusion of a range of fillers of different particle sizes enables close packing of the particles and contributes substantially to a relatively dense and strong lining. Preferably the total quantity of particulate inorganic fillers is from 35% to 55% by weight of the composition.

The present invention is particularly preferably further characterised in that the cement is a fine particle cement, preferably mainly comprising or consisting of particles in the 0.1 to 25 micron size range such as "Densit" (Trademark) cement, available from Densit AS, i.e. is a microfine cement. The selection of such a cement optimises the binding of the wide range of particle size fillers included in the composition contributing to the advantageous properties of the lining produced. The quantity of water required to combine with a given quantity of cement is readily determinable. Such a quantity is preferably used although variations therefrom are permissible within the scope of the present invention.

According to the present invention the composition may very suitably have included therewith fibres to provide reinforcment to the lining produced. The fibres may be any commercially available reinforcing fibres and may suitably be selected from one or more natural fibres such as cotton, wool or flax fibres, or one or more synthetic fibres such as glass fibres, polyamide fibres, polyester fibres, polypropylene fibres, polyacrylonitrile fibres, one or more mineral fibres such as asbestos fibres or one or more metallic fibres such as steel fibres or metal oxide fibres, but are preferably fibres having tensile strengths of from 150,000 MPa to about 400,000 MPa for example carbon fibres. The fibres may be present in from about 0.25% preferably from about 0.5% to about 4% by weight of the composition subject to an undue increase in viscosity not being caused for which last purpose it may be preferred for the fibres to be present in less than 2% wt. Preferably the fibres are included in random orientation for which purpose they may be subjected to shear if they are initially in aligned bundles.

According to the present invention one or more surface active agents and/or gelling agents may suitably be included in the composition. The surface active agent may suitably be an anionic surfactant, for example, a fatty acid carboxylate, a sulphonate, a sulphate or a sulphate product such as a sulphated natural fat or oil, or a phosphate ester, or may suitably be a nonionic surfactant for example an ethoxylated phenol, an ethoxylated aliphatic alcohol, or a carboxylic ester or may suitably be a cationic surfactant, for example a quaternary ammonium salt. The identity of surfactants belonging to these groups is more fully described in the Kirk-Othmer Encyclopedia of Chemical Technology Ed 3 Vol 22 pages 388-389.

According to the present invention the one or more gelling agents which may be included in the composition may suitably be one or more organic gelling agents for example a water-soluble cellulose ester such as carboxylmethyl cellulose, one or more natural gums for example guar gum or a natural resin or one or more mineral gelling agents.

Preferably the gelling agent is included in the composition in from 2.5% to 10% by weight of the composition with the surfactant being included in a weight ratio of from 1:7 to 1:2, particularly preferably from 1:6 to 1:3, relative to the quantity of gelling agent.

Preferred weight % ranges of the ingredients of the main composition and of the total further ingredients as disclosed above are as follows :-

Epoxy resin/hardener      25%-45%
Cement      4%-15%
Particulate inorganic filler      35%-55%
Water      2%- 8%
Other ingredients      5%-15%

Other materials may very suitably be included in the compositions of this invention for example one or more plasticisers for example one or more normally liquid chlorinated paraffins available from Imperial Chemical Industries under the Trade Name Cerechlor, to improve the flow properties of the composition during transport to the point of application or during application, or one or more adhesion promoters such as a suitable surfactant or one or more pigments for example titanium dioxide, iron oxide or chrome pigments.

The compositions provided by the present invention may be prepared by mixing, preferably in a high power mixer such as a Z-blade mixer. Alternatively, the composition may be divided into storage stable components as known to those skilled in the art of epoxy resin usage each component prepared by mixing

4

as above described and the components themselves mixed just prior to application to the surface to be lined.

Preferably, the components are applied to a sewer or water main pipe, or to other conduit requiring lining, by means of a remote controlled pipe-lining apparatus. Said apparatus may very suitably comprise storage means for the components of the composition in the form of hoses which are laid along the pipe, the apparatus being adapted to be advanced through the pipe and comprising a centrifugal lining machine having inlet means for the settable lining composition, delivery tube means connected, at one end, to the inlet means and adapted, at the other end, for insertion into the hose means filled with the settable lining composition, and hose-slitting means at or adjacent the other end of the delivery tube means for axially slitting the hose means as the delivery tube means is urged into the hose means, whereby the settable lining composition can flow from the hose means into the delivery tube means and thence to the centrifugal lining maching as described more fully in patent specification No.PCT/GB86/00486 of Tate Pipe Lining Processes Limited.

The compositions provided by the present invention may be applied in relatively thick layers to the interior of a pipe or sewer, for example in excess of 0.25 cm or 0.5 cm in thickness, for example from 0.35 cm to 1.5cm in thickness and even on the upper portions of horizontal pipes or sewers are relatively non-sagging. Preferably they are trowelled on as described in the last above referred to patent specification. Curing may take place at ambient temperature.

Besides their utility to line sewers or water mains as envisaged above, the compositions of this invention may be used in diverse other applications such as the provision of water resistant protective coatings on the exterior of pipes, for example off-shore oil or gas pipelines, the provision of a water-proofing coating for tanks or baths, or indeed for wall, floor or roof coatings.

The present invention will now be illustrated by reference to the following examples of particular embodiments thereof.

Examples 1, 3 and 5 are according to the invention, with Example 1 representing a particularly preferred embodiment and Examples 2 and 4 are not according to the invention but are comparative therewith.

A number of polymer-cement compositions differing in a specific feature thereof were prepared, were allowed to cure over 7 days in air in formers to produce blocks having the dimensions 10mm x 15mm x 20cm which blocks were subjected to physical tests to determine the Instantaneous Flexural Modulus of and the Flexural Strength according to BSS 2782.

Each polymer-cement composition comprised a water-dilutable glycidylether epoxy resin and hardener therefor (37% wt), hydraulic cement Microfine (Trade Mark) available from Densit (7% wt) together with sufficient water to combine therewith and inorganic particulate fillers (43% wt) together with minor quantities of surface active agent, gelling agent, fibrous reinforcement comprising dealigned carbon fibres and pigment as taught herein.

The compositions differed solely in the identity of the particulate inorganic fillers which was as follows. The identity of the specific components are as described in Example 1 unless stated otherwise.

| Ex | Filler | Particle Size microns | % wt of total composition |
|---|---|---|---|
| 1 | Quartz Powder | 1-50 | 17.5 |
|   | Quartz Sand | 50-250 | 10.0 |
|   | Fly Ash | 1-20 | 8.0 |
|   | Microsilica (Elkem sand) | sub-1 | 7.5 |
| 2 | Quartz Powder | 1-50 | 43 |
| 3 | Quartz Powder | 1-50 | 28 |
|   | Quartz sand | 50-250 | 15 |
| 4 | Zircon Sand | 50-175 | 43 |
| 5 | Southport Sand | 50-250 | 10.0 |
|   | Quartz Powder | 1-50 | 17.5 |
|   | Fly Ash | 1-20 | 8.0 |
|   | Microsilica | sub-1 | 7.5 |

The test results are set out in the following Table.

| Ex | FLEXURAL MODULUS $Nmm^{-2}$ | FLEXURAL STRENGTH $Nmm^{-2}$ |
|---|---|---|
| 1 | 4000 | 60-70 |
| 2 | 1350 | 27 |
| 3 | 2800 | 46 |
| 4 | 3000 | 30 |
| 5 | 2133 | 43.2 |

In a further similar experiment using compositions otherwise according to this invention the microfine cement was replaced by Portland cement (particle size about 10-250 microns). The modulus of elasticity and the Flexural strength of the cured composition containing the Portland cement were found to be significantly lower than of that containing the microfine cement.

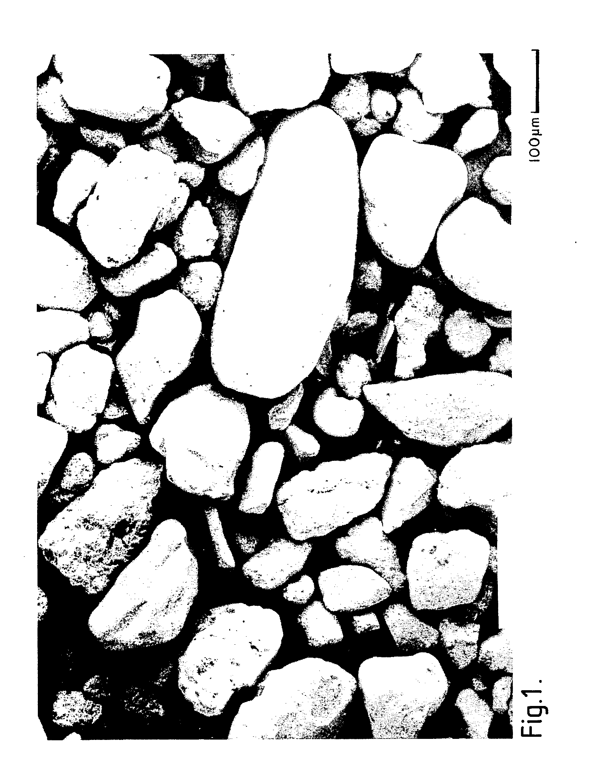

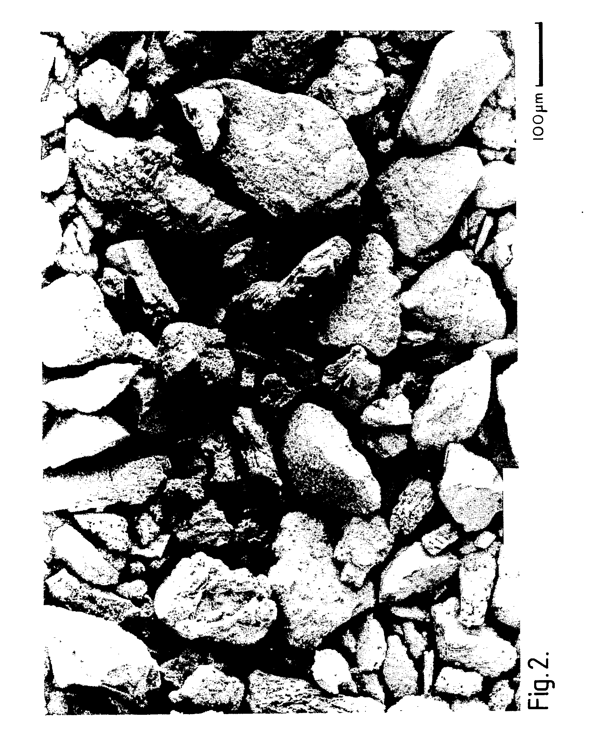

It is observed that the Flexural modulus produced according to Example 5 is lower than would be expected although the Flexural Strength is good. The above 50 microns filler fraction used in Example 5 was a sand which had been eroded by sea action to produce smooth particles while the equivalent fractions used in Examples 1 and 3 comprised angular typically gritty particles hereafter called "grit". Samples of these particles are shown in magnification in Figures 1 and 2 respectively. It is therefore preferred to use an above 50 micron filler fraction comprising angular or non-eroded particles although if the instantaneous flexural modulus of the particular lining composition does not reduce unduly in use with time a usable composition may still be produced using smooth or eroded particles. Compositions having the formulations of Examples 1, 3 and 5, particularly 1, adhere firmly to damp surfaces if applied by a high speed centrifugal impellar as a thick coating of, for example, 0.5 cm and set satisfactorily in situ.

**Claims**

1. A composition suitable for lining a pipe or sewer comprising one or more epoxy resins together with one or more hardeners therefor, hydraulic cement together with water to combine therewith and one or more particulate inorganic fillers characterised by a content in total of epoxy resin and hardener of from 20% to 50% by weight, of cement in from 2% to less than 20% by weight and of particulate inorganic filler in from 30% to 60% by weight.

2. A composition as claimed in claim 1 wherein the content in total of epoxy resin and hardener is from 25% to 45% by weight, of cement is from 4% to15% by weight and of particulate inorganic filler is from 35% to 55% by weight.

3. A composition as claimed in claim 1 or 2 wherein the epoxy resin is a water-dilutable normally liquid epoxy resin.

4. A composition as claimed in any preceding claim containing fibres having a tensile modulus of from 150,000 to 400,000 MPa.

5. A composition as claimed in any preceding claim containing carbon fibres.

6. A composition as claimed in any preceding claim containing dealigned fibres.

7. A composition as claimed in any preceding claim wherein the inorganic particulate filler comprises fractions in the 1 micron to 50 micron and in the 50 micron to 500 micron size ranges.

8. A composition as claimed in claim 7 wherein the said fractions comprise from 30% to 80% by weight and from 5% to 40% by weight of the total quantity of inorganic particulate filler respectively.

9. A composition as claimed in claim 7 or 8 wherein the inorganic particulate filler also comprises a fraction in the sub-1 micron size range.

10. A composition as claimed in claim 9 wherein the sub-1 micron fraction substantially consists of particles in the 0.1 micron to 1.0 micron size range.

11. A composition as claimed in claim 9 or 10 wherein the sub-1 micron fraction comprises 2% to 35% by weight of the quantity of inorganic particulate filler.

12. A composition as claimed in any one of claims 7 to 11 wherein the sub-1micron, the 1 to 50 micron and the 50 to 250 micron fractions comprise rspectively 10% to 30% by weight, 40% to 75% and 10% to 40% of the quantity of inorganic particulate filler.

13. A composition as claimed in any one of claims 7 to 12 wherein the sub-1 micron fraction comprises a microsilica sand.

14. A composition as claimed in any one of claims 7 to 13 wherein the 50 micron to 250 micron fraction comprises agrit.

15. A composition as claimed in any one of claims 7 to 14 wherein the 1 micron to 50 micron fraction comprises quartz powder, fly ash, talc or a spherical aluminosilicate.

16. A composition as claimed in any preceding claim wherein the cement substantially consists of particles in the 0.1 micron to 25 micron size range.

17. A method for lining a pipe or sewer comprising applying to the interior surface of the pipe or sewer a layer of a composition as claimed in any one of claims 1 to 16 and allowing the composition to set.

18. A method as claimed in claim 16 wherein the said layer is from 0.25 to 1.5 cm in thickness.

Fig.1.                                                                    100µm

Fig. 2.

100 μm

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | DE-B-1 198 267 (RAYBESTOS-MANHATTAN, INC.)<br>* Claim 1, column 5, lines 37-55; column 7, lines 25-35 * | 1-3,13, 14,16- 18 | C 04 B 28/02 |
| Y | | 4,6,7, 15 | |
| A | | 8-12 | |
| | --- | | |
| Y | FR-A-2 140 414 (SOC. IT. PLASTOCOAT SOC. ACC. SEMPL. DI C. BOTTA & C.)<br>* Claims 1,3,4,6; page 1, paragraph 1 * | 4,6,7 | |
| A | | 5 | |
| | --- | | |
| Y,D | BE-A- 638 157 (RAYBESTOS-MANHATTAN, INC.)<br>* Claim 22, page 16, paragraph 3 - page 17, paragraph 1; example 5 * | 15 | |
| | --- | | |
| X | AU-B- 419 973 (J.H. DONNELLY)<br>* Claims 1-4,6,15-18; page 2, paragraph 1; page 6, paragraph 3 - page 7, line 7; page 8, paragraphe 4 * | 1-3,9, 10,13- 18 | TECHNICAL FIELDS SEARCHED (Int. Cl.4) |
| | --- | | C 04 B 28/00 |
| X | FR-A-2 413 341 (LASSAILLY REUNIS)<br>* Claims 1-4; example 2; page 1, paragraph 1 * | 1-3,14- 16 | C 04 B 24/00<br>C 04 B 14/00<br>C 04 B 41/00 |
| | ----- | | |

The present search report has been drawn up for all claims

| Place of search | Date of completion of the search | Examiner |
|---|---|---|
| THE HAGUE | 22-01-1988 | HAUCK, H.N. |